# EUROPÄISCHE PATENTSCHRIFT

(11) **EP 2 303 899 B1**
(45) Veröffentlichungstag und Bekanntmachung des Hinweises auf die Patenterteilung: **24.09.2014**
(21) Anmeldenummer: 09777049.9
(22) Anmeldetag: 08.07.2009
(51) Int. Cl.: C07F 9/30, C07F 9/38, C07F 9/535

(54) **VERFAHREN ZUR HERSTELLUNG VON BIS(FLUORALKYL)PHOSPHINSÄURE ODER FLUORALKYLPHOSPHONSÄURE**
PROCESS FOR PREPARING BIS(FLUOROALKYL)PHOSPHINIC ACID OR FLUOROALKYLPHOSPHONIC ACID
PROCÉDÉ DE PRODUCTION D ACIDE BIS(FLUOROALKYL)PHOSPHINIQUE OU D ACIDE FLUOROALKYLPHOSPHONIQUE

(30) Priorität: 28.07.2008 DE 102008035174
(43) Veröffentlichungstag der Anmeldung: 06.04.2011
(73) Patentinhaber: Merck Patent GmbH, 64293 Darmstadt (DE)
(72) Erfinder: IGNATYEV, Nikolai (Mykola), 47058 Duisburg (DE); BEJAN, Dana, 42119 Wuppertal (DE); WILLNER, Helge, 45481 Muelheim/Ruhr (DE)
(86) Internationale Anmeldenummer: PCT/EP2009/004953
(87) Internationale Veröffentlichungsnummer: WO 2010/012359

(56) Entgegenhaltungen:
- WO-A-03/087111
- US-A- 4 309 310
- GRUBER, M. ET AL.: PHOSPHORUS, SULFUR AND SILICON AND THE RELATED ELEMENTS, Bd. 44, 1989, Seiten 109-122, XP009122708
- KOVALEVA T V ET AL: "Perfluoroalkyl- phosphonic acids and their derivatives" JOURNAL OF GENERAL CHEMISTRY USSR, CONSULTANTS BUREAU, NEW YORK, NY, US, Bd. 59, Nr. 11, 20. April 1990 (1990-04-20), Seiten 2245-2248, XP002246155 ISSN: 0022-1279 in der Anmeldung erwähnt
- MAHMOOD, T. ET AL.: "New Perfluoralkylphosphonic and Bis(perfluoralkyl)phosphinic Acids and Their Precursors", INORG. CHEM., vol. 25, 1986, pages 3128-3131,

## Beschreibung

Die Erfindung betrifft ein Verfahren zur Herstellung von Bis(fluoralkyl)phosphinsäure und/oder Fluoralkylphosphonsäure durch Umsetzung von Monofluoralkyltetrafluorphosphoran, Bis(fluoralkyl)trifluorphosphoran oder Tris(fluoralkyl)difluorphosphoran mit Wasser.

Bis(fluoralkyl)phosphinsäuren und auch Fluoralkylphosphonsäuren sind bekannte Chemikalien. Bis(trifluormethyl)phosphinsäure bzw. Trifluormethylphosphonsäure wurde von H.J. Emeleus et al, J.Chem.Soc., 1954, 3598-3603 oder von H.J. Emeleus et al, J.Chem.Soc., 1955, 563-574 hergestellt. Trifluormethylphosphonsäure wurde durch oxidative Hydrolyse von CF₃PX₂ oder (CF₃)₂PX mit X = Cl oder I hergestellt, oder durch kontrollierter Hydrolyse von (CF₃)₃P. Die Synthese der Ausgangsverbindungen für diese Umsetzungen sind jedoch aufwendig und zeitaufwendig, wobei auch die Aufarbeitung in dieser 2-Stufensynthese inklusive der Aufarbeitung mit eingeschlossen ist.

Bis(heptafluorpropyl)phosphinsäure und Heptafluorpropylphosphonsäure wurden auf ähnliche Weise ausgehend von C₃F₇I und rotem Phosphor in einem Autoklaven bei 220 bis 230°C hergestellt, wobei als Zwischenprodukt C₃F₇PI₂ und (C₃F₇)₂PI entsteht. Nach Separierung von (C₃F₇)₂PI wird mit Silberchlorid für 11 Tage weiter zum Chlorbisheptafluorpropylphosphin (C₃F₇)₂PCl umgesetzt, welches umgewandelt wird in das Trichlorbisheptafluorpropylphosphoran (C₃F₇)₂PCl₃. Diese Verbindung wird dann letztendlich durch Reaktion mit Wasser zu Bis(heptafluorpropyl)phosphinsäure hydrolysiert. Diese komplexe Abfolge der Reaktionen ist aus H.J. Emeleus J.D. Smith, J.Chem.Soc., 1959, 375-381 bekannt und wirtschaftlich großtechnisch nicht umsetzbar.

R.C. Paul, J.Chem.Soc., 1955, 574-575 beschreibt eine Hydrolyse von Tris(trifluormethyl)phosphinoxid mit Wasser zu Bis(trifluormethyl)phosphinsäure oder mit Natriumhydroxid zu Natriumtrifluormethylphosphonat. Der Nachteil dieser Umsetzung ist der schwere Zugang zu der Ausgangsverbindung Tris(trifluormethyl)phosphinoxid, welche nur über das schwer zugängliche Tris(trifluormethyl)dichlorphosporan durch Umsetzung mit wasserfreier Oxalsäure möglich ist.

Bis(perfluoralkyl)phosphinsäure kann nach R.P. Singh, J.M. Shreeve, Inorg. Chem., 39, 2000, 1787-1789 auch durch Hydrolyse der entsprechenden Anhydride hergestellt werden, die wiederum durch Oxidation von Bis(perfluoralkyl)iodphosphin mit NO₂ hergestellt wurden.

Alternativ zur Hydrolyse von Bis(perfluoralkyl)phosphinsäureanhydrid kann die Umsetzung von Bis(perfluoralkyl)phosphinsäurechloriden mit Wasser gesehen werden. Normalerweise ist jedoch die Bis(perfluoralkyl)phosphinsäure der Ausgangsstoff zur Synthese von Bis(perfluoralkyl)phosphinsäurechloriden, so dass dies nur eine akademische Variante darstellt.

Aus WO 2003/087110 ist eine zweistufige Reaktion bekannt, wobei zunächst Tris(perfluoralkyl)diflorphosphoran mit wässrigem HF (Flusssäure) umgesetzt wird und die entstehende Tris(perfluoralkyl)trifluorphosphorsäure H[(Perfluoralkyl)₃PF₃]*nH₂O weiter bei Kochen der wässrigen Lösung hydrolysiert wird.

Die Umwandlung von Bis(perfluoralkyl)phosphinsäure in Perfluoralkylphosphonsäure erfolgt sehr langsam und benötigt hohe Temperaturen.

T.V. Kovaleva et al, J.Gen.Chem. USSR (engl. Transl), 59,1989, 2245-2248 beschreiben eine Hydrolyse von Tris(perfluoralkyl)difluorphosphoran mit einer 20%igen Natriumhydroxid-Lösung, wobei das Dinatriumsalz der Perfluoralkylphosphonsäure entsteht, welches durch Behandlung mit konzentrierter Salzsäure in die Perfluoralkylphosphonsäue umgewandelt werden kann.

In der Publikation Mahmood, T. et al, Inorg. Chem, 1986, 25, 3128-3131 wird auf Seite 3129 die Reaktion von Tris(perfluorbutyl)phosphinoxid und Tris(perfluorbutyl)difluorphosphoran mit Wasser beschrieben.

Bis(fluoralkyl)phosphinsäure und Fluoralkylphosphonsäure sind beispielsweise interessante Komponenten von protonenleitenden Membranen oder erfindunsgemäß geeignet als Katalysatoren in der organischen Chemie. Sie sind weiterhin geeignet für den Einsatz als Tenside per se oder zur weiteren Umsetzung zu den entsprechenden Säurechloriden oder Säuredichloriden, die wiederum geeignet sind für die Synthese von neuen Materialien, beispielsweise von ionischen Flüssigkeiten. Es ist daher wünschenswert eine wirtschaftlich und großtechnisch umsetzbare Synthese dieser Verbindungen zur Verfügung zu haben, damit diese interessante Klasse der Bis(fluoralkyl)phosphinsäuren oder Fluoralkylphosphonsäuren in großen Mengen hergestellt werden können.

Aufgabe der Erfindung ist daher ein verbessertes Verfahren zur Herstellung von Bis(fluoralkyl)phosphinsäure und Fluoralkylphosphonsäure oder von Bis(fluoralkyl)phosphinsäure oder Fluoralkylphosphonsäure zu entwickeln, das den Anforderungen einer großtechnischen wirtschaftlichen Synthese gerecht wird.

Überraschenderweise wurde gefunden, dass Fluoralkyl-fluorphosphorane einfach durch Hydrolyse mit Wasser umgesetzt werden können, wobei die Entstehung der Bis(fluoralkyl)phosphinsäure oder der Fluoralkylphosphonsäure durch die Reaktionstemperatur und die Art der Reaktionsführung gesteuert werden kann.

Der Gegenstand der Erfindung ist daher ein Verfahren zur Herstellung von Bis(fluoralkyl)phosphinsäure und Fluoralkylphosphonsäure oder von Bis(fluoralkyl)phosphinsäure oder Fluoralkylphosphonsäure durch Umsetzung von Monofluoralkyltetrafluorphosphoran, Bis(fluoralkyl)trifluorphosphoran oder Tris(fluoralkyl)difluorphosphoran mit Wasser.

Die Ausgangsverbindungen, d.h. die bezeichneten Phosphorane sind kommerziell erhältlich oder herstellbar, wie beispielsweise in N. Ignat'ev, P. Sartori, J. of Fluorine Chemistry, 103 (2000), p. 57-61; WO 00/21969; US 6,264,818 oder WO 98/15562, Merck Patent GmbH, Darmstadt, beschrieben.

In einer bevorzugten Ausführungsform wird eine Bis(fluoralkyl)phosphinsäure und/oder Fluoralkylphosphonsäure der Formel I

(CₓF_{2x+1-y}H_{y})ₙP(O)(OH)ₘ I

hergestellt, wobei
x steht für 1, 2, 3, 4, 5, 6, 7, 8, 9, 10, 11 oder 12,
y steht für 0, 1, 2, 3, 4 oder 5, wobei jedoch für x = 1 oder 2, y = 0, 1 oder 2 bedeutet,
n steht für 1 oder 2,
m steht für 1 oder 2,
mit der Bedingung, dass n+m gleich 3 ist.

Besonders bevorzugt steht x für 1, 2, 3 oder 4, ganz besonders bevorzugt steht x für 2 oder 4.

Besonders bevorzugt steht y für 0.

Zur Synthese dieser bevorzugten Verbindungen der Formel I werden Ausgangsverbindungen der Formel II eingesetzt,

(CₓF_{2x+1-y}H_{y})ₖPFₚ II,

wobei
x steht für 1, 2, 3, 4, 5, 6, 7, 8, 9, 10, 11 oder 12,
y steht für 0, 1, 2 oder 3,
k steht für 1, 2 oder 3,
p steht für 2, 3 oder 4,
mit der Bedingung, dass k+p gleich 5 ist.

Besonders bevorzugt steht x für 1, 2, 3 oder 4, ganz besonders bevorzugt steht x für 2 oder 4.

Besonders bevorzugt steht y für 0. In diesem Fall handelt es sich um Perfluoralkylgruppen, wie beispielsweise Trifluormethyl, Pentafluorethyl, Heptafluorpropyl oder lineares oder verzweigtes Nonafluorbutyl. Ganz besonders bevorzugte Perfluoralkylgruppen sind Pentafluorethyl oder lineares Nonafluorbutyl.

Es können bei der erfindungsgemäßen Reaktion Gemische der Bis(fluoralkyl)phosphinsäure und der Fluoralkylphosphonsäure entstehen. Die Reaktion kann jedoch auch so gesteuert werden, dass selektiv nur die gewünschte Bis(fluoralkyl)phosphinsäure oder die gewünschte Fluoralkylphosphonsäure entsteht. Dies wird durch die Wahl des Phosphorans als Ausgangsstoff und der Temperaturführung der Reaktion beeinflusst.
Durch Reaktion mit Monofluoralkyltetrafluorphosphoran ensteht selektiv eine entsprechende Fluoralkylphosphonsäure.

Es ist jedoch möglich, selektiv aus einem Bis(fluoralkyl)trifluorphosphoran oder Tris(fluoralkyl)difluorphosphoran, beispielsweise der Formel II, bei der k steht für 2 oder 3 und p steht für 2 oder 3, eine Fluoralkylphosphonsäure, beispielsweise der Formel I mit n = 1 und m = 2, herzustellen, indem die Durchmischung des Phosphorans mit Wasser bei Temperaturen von 50° bis 100°C erfolgt und die vollständige Reaktion bei Temperaturen von 100°C bis 150°C stattfindet. Die Reaktionsdauer für die selektive Umwandlung in eine entsprechende Fluoralkylphosphonsäure beträgt einige Tage, beispielsweise 2 bis 14 Tage.

Es ist jedoch auch möglich, selektiv aus einem Bis(fluoralkyl)trifluorphosphoran oder Tris(fluoralkyl)difluorphosphoran, beispielsweise der Formel II, bei der k steht für 2 oder 3 und p steht für 2 oder 3, eine Bis(fluoralkyl)phosphinsäure, beispielsweise der Formel I mit n = 2 und m = 1, herzustellen, indem die Durchmischung des Phosphorans mit Wasser für Kettenlängen mit 2 und 3 C-Atomen der Fluoralkylgruppe bei Temperaturen von 0°C bis Raumtemperatur erfolgt oder die Durchmischung des Phosphorans mit Wasser für Kettenlängen ab 4-C-Atomen für die Fluoralkylgruppe, wie zuvor definiert, bei Temperaturen von Raumtemperatur bis 100°C stattfindet und die vollständige Reaktion bei Temperaturen von 100°C bis 150°C stattfindet. Die Reaktionsdauer für die selektive Umwandlung in eine entsprechende Bis(fluoralkyl)phosphinsäure beträgt einige Stunden, beispielsweise 1 bis 24 Stunden.

Die Umsetzung mit Wasser findet ohne Beteiligung eines weiteren organischen Lösungsmittels statt. In der Regel wird mit einem Überschuss von Wasser gearbeitet, beispielsweise mit einem 3fachen bis 30fachen Überschuss.

Das erfindungsgemäße Verfahren ermöglicht eine Synthese von Bis(fluoralkyl)phosphinsäuren und/oder Fluoralkylphosphonsäuren mit einer Ausbeute, die im Vergleich zum Stand der Technik verbessert ist. Weiterhin ist dieses Verfahren für eine großtechnische Synthese geeignet, da in der erfindungsgemäßen Reaktion Wasser als Reagenz eingesetzt wird und so auf den Einsatz der Flusssäure verzichtet werden kann, bei deren Handhabung als Reagenz Vorsichtsmaßnahmen notwendig sind, da diese toxisch und ätzend ist. Der Aufwand der Abtrennung der entstehenden Flusssäure im Prozess ist demgegenüber viel geringer.

Ein weiterer Gegenstand der Erfindung ist die Verwendung von Bis(fluoralkyl)phosphinsäure und/oder Fluoralkylphosphonsäure als Katalysator in der organischen Chemie. Bis(fluoralkyl)phosphinsäure oder Fluoralkylphosphonsäure, besonders bevorzugt Bis(fluoralkyl)phosphinsäure, ist beispielsweise ein Katalysator für
- Friedel-Crafts-Acylierungen,
- Friedel-Crafts Alkylierungen, beispielsweise die Herstellung von 2,6-Di*tert*-butyl-4-methyl-phenol,
- Friedel-Crafts Arylierungen,
- Friedel-Crafts Benzylierung von aromatischen Verbindungen,
- Kondensation von Phenolen mit aromatischen Aldehyden,
- Alkylierung und Oligocondensation von Alkanen,
- Isomerisierung und Cracking von Paraffinen (Allkane) oder Cycloalkane,
- Alkylierung von aromatischen Verbindungen mit Alkoholen, Halogenalkanen, Carbonylverbindungen, Allkylestern von Carbonsäuren,
- Isomerisierung von Alkylbenzen,
- Cycloalkylierung (Ringschluss-Reaktionen),
- Carboxylierng (Koch-Haat-Typ-Reaktionen) und Carbonylierung von Alkanen und Alkoholen,
- Aromatische Formylierung (the Gattermann-Koch typisch Reaktionen),
- Sulfonierung und Sulfonylierung (Friedel-Crafts-Typ-Reaktionen),
- Nitrierung,
- Halogenierung (Fluorierung) von aromatischen und aliphatischen Verbindungen,
- Electrophile Aminierung von aromatischen Verbindungen,
- Oxygenierung (Hydroxylierung) von Alkanen, Aromaten und Naturstoffen (Steroide, Alkaloide) mit Ozon (O₃) und Wasserstoffperoxid oder anderen Peroxiden,
- Acylierung von Alkoholen, Phenolen, Thiophenolen, aromatischen Aminen,
- Transformation von Carbonylverbindungen zu O,O-Acetalen, O,S-Acetalen oder S,S-Acetalen (Schutzgruppenreaktionen),
- Entschützungsreaktionen, beispielsweise die Umwanlung von Trialkylsilylethern in die korespondierenden Alkohole,
- Synthese von Heterocyclen: Oxa-cycloalkane and -alkene, Stickstoffenthaltende Heterocyclen, Heterocyclen mit zwei oder drei Heteroatomen,
- Ringschlussreaktionen und Cycloadditionsreaktionen, beispielsweise Diels-Alder-Reaktion, Hetero Diels-Alder-Reaktion, Prins-Typ-Reaktionen,
- Ringöffnungsreaktionen, beispielsweise Öffnen von Oxiranen,
- Dehydrierung von Alkoholen, Diolen und Polyolen zur Entstehung von Alkenen, Cylcloalkenen oder Ethern,
- O-Glycosylierung von Kohlenhydraten und Naturstoffen wie beispielsweise Glycosylfluorid,
- Umlagerungsreaktionen, beispielsweise Umlagerung von Terpenen, Beckmann-Reaktion, Fries-, Rupe-, Bamberger-, Fischer-Hepp-, Schmidt- und Nazarov-Reaktionen,
- Ionische Hydrogenierung,
- Veresterung und Esterspaltung,
- Michael-Typ-Additionen,
- Addition von Phenolen, Alkoholen, Carbonsäuren, Sulfonamiden, Carbamaten, Acetamiden und Benzamiden an Alkene,
- Amino-sulfonierung von Alkenen,
- Addition von Allylsilanen und Allylboronaten an Aldehyde und Cycloalkene.
- Ritter-TypReaktionen,
- Polymerisierung von Olefinen, Ethern und Siloxanen,
- Mannich- und Aza-Mannich-Typ-Reakctionen,
- Chemische und elektrochemische Oxidation,
- Kondensationsreaktionen, beispielsweise Aldolkondensation und Dimerisierungsreaktion,
- Baeyer-Villiger Oxidation,
- Thiele-Winter-Reaktion von Chinonen,
- Silylierung von Alkoholen,
- Addition von Phosphinen an Alkene,
- Hydrierung von Alkinen,
- Synthese von Sulfonium- und Selenium-Salzen.

Erfindungsgemäß besonders bevorzugt werden die Bis(fluoralkyl)phosphinsäure oder Fluoralkylphosphonsäure eingesetzt in Friedel-Crafts-Typ-Reaktionen, wie zuvor beschrieben, ganz besonders bevorzugt in Friedel-Crafts-Acylierungen.

Die entsprechende Bis(fluoralkyl)phosphinsäure oder Fluoralkylphosphonsäure wird in der Regel in 0,01 bis 15 mol% bezogen auf die eingesetzte Menge an der zu acylierenden Verbindung. Besonders bevorzugt werden 1 mol% bis 10 mol% Katalysator verwendet. Die weiteren Reaktionsbedingungen werden nicht verändert und sind dem Fachmann aus der Fachliteratur bekannt. Die Beispiele 5 und 6 belegen die erfindungsgemäße Verwendung. Durch die Verwendung der erfindungsgemäßen Katalysatoren findet eine hervorragende Ausbeutesteigerung statt. Dies dokumentiert das Vergleichsbeispiel 7.

Die entsprechende Bis(fluoralkyl)phosphinsäure oder Fluoralkylphosphonsäure kann auch im Gemisch mit anderen Brønsted oder Lewis Säuren verwendet werden.

Es ist literaturbekannt [G.A. Olah, G.K. Surya Prakash, A. Molnar, J. Sommer, Superacid Chemistry, 2. Ed., Wiley, 2009, 501-788], dass die zuvor beschriebenen Reaktionen durch Perfluoralkansulfonsäuren, beispielsweise Trifluormethansulfonsäure katalysiert warden können. Diese starken Säuren sind effektive Katalysatoren (Beispiel 8). Jedoch sind derart bekannte Katalysatoren aufgrund der hohen hydrolytischen Stabilität persistent. Es ist beispielsweise auch bekannt, dass die Produktion der Perfluoroctansulfonsäure aus diesen Gründen in den USA schon eingeschränkt wurde.

Bis(perfluoralkyl)phosphinsäure und Fluoralkylphosphonsäure sind weniger hydrolysestabil, insbesondere in basischen Medien. Durch Hydrolyse entsteht aus diesen Verbindungen Phosphate und flüchtige Monohydroperfluoralkane, beispielsweise C₂F₅H (F 125), welche als nichttoxische ozonfreundliche Substitute für Chlor-Fluor-Kohlenwasserstoffe eingesetzt werden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele:

Die NMR-Spektren wurden an Lösungen in deuterierten Lösungsmitteln bei 20°C an einem Bruker Avance 400 Spektrometer mit einem 5 mm Breitbandkopf ¹H/BB mit Deuterium Lock gemessen, falls nicht in den Beispielen angegeben. Die Messfrequenzen der verschiedenen Kerne sind: ¹H: 400,13 MHz, ¹⁹F: 376,49 MHz und ³¹P: 161,97 MHz. Die Methode der Referenzierung wird bei jedem Spektrum bzw. bei jedem Datensatz separat angegeben.

### Beispiel 1:

### Synthese von Bis(pentafluorethyl)phosphinsäure, (C₂F₅)₂P(O)OH

250 g (0.59 mol) Tris(pentafluorethyl)difluorphosphoran werden unter starkem Rühren langsam bei Raumtemperatur zu 86 g (4.78 mol) Wasser gegeben. Die erhaltene Lösung wird 24 Stunden auf eine Temperatur von 100° bis 110°C erhitzt (Ölbadtemperatur 120°C). Die Vollständigkeit der Reaktion wird durch ³¹P-NMR-Messungen kontrolliert. Danach wird die wässrige HF abdestilliert. Der Rückstand wird anschließend unter reduziertem Druck destilliert. Man erhält 134.4 g flüssige Bis(pentafluorethyl)phosphinsäure, das entspricht einer Ausbeute von 76% bezogen auf Tris(pentafluorethyl)difluorphosphoran.

Siedepunkt: 54-56°C (0.6 mbar) (Literatur: 63-64°C (125 Pa aus WO 03/087110).
Die NMR-Spektren werden für die Reinsubstanz gemessen mit einem Acetonitril-d3-Film als externer Lock.
¹H NMR (Referenz TMS), δ, ppm: 12.6 s (OH).
¹⁹F NMR (Referenz CCl₃F), δ, ppm: -81.9 m (2CF₃); -127.0 d (2CF₂); ²*J*_{P,F} = 85 Hz.
³¹P NMR (Referenz 85 % H₃PO₄, Lösungsmittel CD₃CN), δ, ppm: 6.7 quin; ²*J*_{P,F} = 84 Hz.

### Beispiel 2: Synthese von Bis(nonafluorbutyl)phosphinsäure, (C₄F₉)₂P(O)OH

117 g (0.16 mol) Tris(nonafluorbutyl)difluorphosphoran werden unter starkem Rühren langsam zu 55 g (3.06 mol) Wasser gegeben, wobei das Wasser eine Temperatur zwischen 90° und 100°C hat. Die erhaltene Lösung wird 1 Stunde zum Rückfluss (Temperatur 100-125°C) erhitzt. Die Vollständigkeit der Reaktion wird durch ³¹P-NMR-Messungen kontrolliert. Danach wird die wässrige HF abdestilliert. Der Rückstand wird anschließend unter reduziertem Druck bei 50°C Ölbadtemperatur getrocknet. Man erhält 75.8 g feste Bis(nonafluorbutyl)phosphinsäure, das entspricht einer Ausbeute von 94% bezogen auf Tris(nonafluorbutyl)difluorphosphoran.

¹H NMR (Referenz TMS, Lösungsmittel CD₃CN), δ, ppm: 12.1 s (OH).
¹⁹F NMR (Referenz CCl₃F, Lösungsmittel CD₃CN), δ, ppm: -82.4 t,m (2CF₃); -121.8 br.s (2CF₂); -122.4 d (2CF₂); -127.0 m (2CF₂); ²*J*_{P,F} = 85 Hz; ⁴*J*_{F,F} = 10 Hz.
³¹P NMR (Referenz 85 % H₃PO₄, Lösungsmittel CD₃CN), δ, ppm: 3.9 quin; ²*J*_{P,F} = 85 Hz.

### Beispiel 3: Synthese von Pentafluorethylphosphonsäure, (C₂F₅)P(O)(OH)₂

222 g (0.52 mol) Tris(pentafluorethyl)difluorphosphoran wird unter starkem Rühren langsam zu 120 g (6.67 mol) Wasser gegeben, wobei das Wasser eine Temperatur zwischen 95° und 100°C hat. Die erhaltene Lösung wird 14 Tage zum Rückfluss erhitzt (Temperatur des Ölbads 100-125°C). Die Vollständigkeit der Reaktion wird durch ³¹P-NMR-Messungen kontrolliert. Danach wird wässrige HF abdestilliert. Der Rückstand wird anschließend unter reduziertem Druck bei 60-70°C Ölbadtemperatur 10 Stunden getrocknet. Man erhält 103 g flüssige Pentafluorethylphosphonsäure, das entspricht einer Ausbeute von 99% bezogen auf Tris(pentafluorethyl)difluorphosphoran.
Die NMR-Spektren werden für die Reinsubstanz gemessen mit einem Acetonitril-d3-Film als externer Lock.

¹H NMR (Standard: TMS), δ, ppm: 11.3 s (2OH).
¹⁹F NMR (Standard: CCl₃F), δ, ppm: -82.7 br. s (CF₃), -128.4 d (CF₂), ²J_{P,F} = 89 Hz.
³¹P NMR (Standard: 85 % H₃PO₄), δ, ppm: -1.3 t, ²*J*_{P,F} = 89 Hz.

### Beispiel 4: Synthese von n-Nonafluorbutylphosphonsäure, (C₄F₉)P(O)(OH)₂

115 g (0.16 mol) Tris(nonafluorbutyl)difluorphosphoran wird unter starkem Rühren langsam zu 60 g (3.33 mol) Wasser gegeben, wobei das Wasser eine Temperatur zwischen 90° und 96°C hat. Die erhaltene Lösung wird 4 Tage zum Rückfluss erhitzt (Temperatur 100-125°C). Die Vollständigkeit der Reaktion wird durch ³¹P-NMR-Messungen kontrolliert. Danach wird wässrige HF abdestilliert. Der Rückstand wird anschließend unter reduziertem Druck bei 60-70°C Ölbadtemperatur getrocknet. Man erhält 47 g feste n-Nonafluorbutylphosphonsäure, das entspricht einer Ausbeute von 99% bezogen auf Tris(nonafluorbutyl)difluorphosphoran.

¹H NMR (Lösungsmittel: CD₃CN; Standard: TMS), δ, ppm: 11.1 s (2OH).
¹⁹F NMR (Lösungsmittel: CD₃CN; Standard: CCl₃F), δ, ppm: -82.4 t,m (CF₃), -122.5 m (CF₂), -124.8 d,t,m (CF₂), -127.1 t,m (CF₂), ²J_{P,P} = 88 Hz, ⁴*J*_{F,F} = 14 Hz, ⁴*J*_{F,F} = 11 Hz.
³¹P NMR (Lösungsmittel CD₃CN; Standard: 85 % H₃PO₄), δ, ppm: -1.1 t, ²*J*_{P,F} = 90 Hz.

### Beispiel 5:

### Acylierung von β-naphthol mit Essigsäureanhydrid in Gegenwart von (C₂F₅)₂P(O)OH:

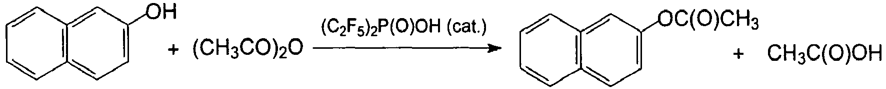

a) Zu einer Mischung von 1 g (6.9 mmol) β-Naphtol und 0.02 g (0.06 mmol; 1 mol %) (C₂F₅)₂P(O)OH in 2.5 cm³ CH₂Cl₂ werden 0.845 g (8.28 mmol) Essigsäureanhydrid (Ac₂O) bei Raumtemperatur gegeben. Die Reaktionsmischung wird für weitere 30 Minuten bei Raumtemperatur gerührt. Anschließend wird die erhaltene Lösung unter reduziertem Druck konzentriert und der Rückstand in Diethylether (Et₂O 30 cm³) aufgenommen. Die organische Phase wird mit Wasser und 2% wässrige NaOH und gesättigter NaCl-Lösung gewaschen. Nach Trocknen über MgSO₄ und Destillation des Diethylether unter reduziertem Druck, erhält man 1.24 g (6.6 mmol) 2-Acetoxynaphthalen als Feststoff. Die Ausbeute von 2-Acetoxynaphthalen ist 96%, basierend auf der eingesetzten Menge an β-Naphtol.
   Der gemessene Schmelzpunkt von 70° C entspricht dem Literaturwert [P. Baumgarten, Berichte der Deutschen Chemischen Gesellschaft, 60B (1927), S. 1174-1178; A. McKillop, E.C. Taylor, Ger. Offen. DE 69-1903598, US 68-700352]. ¹H- und ¹³C NMR-Spektren entsprechen ebenfalls den Literaturdaten [P. Granger and M. Maugras, Organic Magnetic Resonance, 1975, Vol. 7, pp. 598-601].
b) Eine Mischung von 0.246 g (1.7 mmol) β-Naphtol, 0.209 g (2.04 mmol) Ac₂O und 0.05 g (0.165 mmol; 10 mol %) (C₂F₅)₂P(O)OH wird für 30 Minuten bei Raumtemperatur gerührt. Es entsteht ein Feststoff, der mit Wasser gewaschen wird und mit Diethylether extrahiert wird. Die organische Phase wird anschließend mit 2% wässriger NaOH und gesättigter NaCl-Lösung gewaschen. Nach Trocknen mit MgSO₄ und Abdestillieren des Diethylethers unter reduziertem Druck erhält man 0,3 g (1.6 mmol) 2-Acetoxynaphthalen, dies entspricht einer Ausbeute von 94% bezogen auf die eingesetzte Menge an β-Naphtol. Schmelzpunkt und NMR-Spektren entsprechen den Werten, gemessen für das Produkt aus Beispiel 5a.

### Beispiel 6:

### Acylierung von β-Naphtol mit Essigsäureanhydrid in Gegenwart von (C₄F₉)₂P(O)OH:

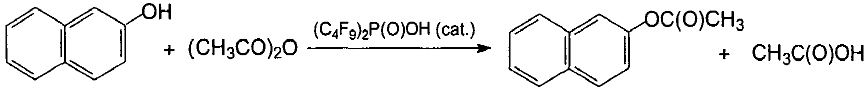

Zu einer Mischung von 0.5 g (3.46 mmol) β-Naphtol und 0.017 g (0.03 mmol; 1 mol %) (C₄F₉)₂P(O)OH in 3 cm³ CH₂Cl₂ werden 0.42 g (4.11 mmol) Essigsäureanhydrid (Ac₂O) bei Raumtemperatur gegeben. Die Reaktionsmischung wird für weitere 30 Minuten bei Raumtemperatur gerührt. Anschließend wird die erhaltene Lösung unter reduziertem Druck konzentriert und der Rückstand in Diethylether (Et₂O) aufgenommen. Die organische Phase wird mit Wasser und 2% wässrige NaOH und gesättigter NaCl-Lösung gewaschen. Nach Trocknen über MgSO₄ und Destillation des Diethylether unter reduziertem Druck, erhält man 0,62 g (3,3 mmol) 2-Acetoxynaphthalen als Feststoff. Die Ausbeute von 2-Acetoxynaphthalen ist 96%, basierend auf der eingesetzten Menge an β-Naphtol.

Schmelzpunkt und NMR-Spektren entsprechen den Werten, gemessen für das Produkt aus Beispiel 5a.

### Beispiel 7:

### Acylierung von β-Naphtol mit Essigsäureanhydrid in Abwesenheit eines erfindungsgemäßen Katalysators:

Zu einer Mischung von 1 g (6.9 mmol) β-Naphtol in 2,5 cm³ CH₂Cl₂ werden 0.86 g (8.4 mmol) Essigsäureanhydrid (Ac₂O) bei Raumtemperatur gegeben. Die Reaktionsmischung wird für weitere 30 Minuten bei Raumtemperatur gerührt. Anschließend wird die erhaltene Lösung unter reduziertem Druck konzentriert und der Rückstand in Diethylether (Et₂O) aufgenommen. Die organische Phase wird mit Wasser und 2% wässriger NaOH und gesättigter NaCl-Lösung gewaschen. Nach Trocknen über MgSO₄ und Destillation des Diethylether unter reduziertem Druck, erhält man 0.13 g (0.7 mmol) 2-Acetoxynaphthalen als Feststoff. Die Ausbeute von 2-Acetoxynaphthalen ist 10%, basierend auf der eingesetzten Menge an β-Naphtol.

Das erhaltene Produkt hat einen Schmelzpunkt von 65°C, welcher um 5°C niedriger ist im Vergleich zum 2-Acetoxynaphthalen aus Beispiel 5, was auf Verunreinigungen in dem Produkt hindeutet.

### Beispiel 8:

### Acylierung von β Naphthol mit Ac₂O in Gegenwart von Trifluormethansulfonsäure, CF₃SO₃H:

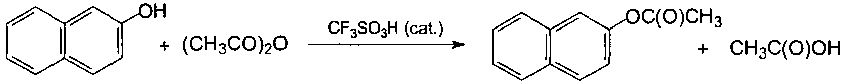

Zu einer Mischung von β-Naphthol (1.01 g, 7.0 mmol) und Essigsäureanhydrid, Ac₂O (0.856 g, 8.4 mmol) in CH₂Cl₂ (2.5 cm³) werden 0.02 g (0.13 mmol; 1.9 mol %) CF₃SO₃H bei Raumtemperatur zugegeben. Die Reaktionsmischung wird für weitere 30 Minuten gerührt. Die erhaltene homogene Lösung wird unter reduziertem Druck konzentriert. Der erhaltene feste Rückstand wird in Diethylether aufgenommen. Die organischen Phasen werden mit Wasser, 2%iger wässriger NaOH und gesättigter Natriumchlorid-Lösung gewaschen. Nach Trocknen über MgSO₄ und entfernen des organischen Lösungsmittels unter vermindertem Druck, erhält man 1.25 g (6.7 mmol) eines weissen Feststoffs. Die Ausbeute von 2-Acetoxynaphthalen beträgt 95.7%, basierend auf der eingesetzten Menge an β-Naphthol. Der Schmelzpunkt und NMR-Spektren sind identisch zu den Werten des Beispiels 5a.

## Patentansprüche

1. Verfahren zur Herstellung von Bis(fluoralkyl)phosphinsäure und Fluoralkylphosphonsäure oder von Bis(fluoralkyl)phosphinsäure oder Fluoralkylphosphonsäure durch Umsetzung von Monofluoralkyltetrafluorphosphoran, Bis(fluoralkyl)trifluorphosphoran oder Tris(fluoralkyl)difluorphosphoran mit Wasser.

2. Verfahren nach Anspruch 1, **dadurch gekennzeichnet, dass** eine Bis(fluoralkyl)phosphinsäure und/oder Fluoralkylphosphonsäure der Formel I
(CₓF_{2x+1-y}H_{y})ₙP(O)(OH)ₘ I
hergestellt wird, wobei
x steht für 1, 2, 3, 4, 5, 6, 7, 8, 9, 10, 11 oder 12,
y steht für 0, 1, 2, 3, 4 oder 5, wobei jedoch für x = 1 oder 2, y = 0, 1 oder 2 bedeutet,
n steht für 1 oder 2,
m steht für 1 oder 2,
mit der Bedingung, dass n+m gleich 3 ist.

3. Verfahren nach Anspruch 1 oder 2, **dadurch gekennzeichnet, dass** als Phosphoran eine Verbindung der Formel II
(CₓF_{2x1-y}H_{y})ₖPFₚ II
eingesetzt wird, wobei
x steht für 1, 2, 3, 4, 5, 6, 7, 8, 9, 10. 11 oder 12,
y steht für 0, 1, 2 oder 3,
k steht für 1, 2 oder 3,
p steht für 2, 3 oder 4,
mit der Bedingung, dass k+p gleich 5 ist.

4. Verfahren nach einem oder mehreren der Ansprüche 1 bis 3, **dadurch gekennzeichnet, dass** die Reaktion bei Temperaturen von 100°C bis 150°C stattfindet.

5. Verfahren zur Herstellung von Bis(fluoralkyl)phosphinsäure und Fluoralkylphosphonsäure oder von Bis(fluoralkyl)phosphinsäure oder Fluoralkylphosphonsäure durch Umsetzung von Monofluoralkyltetrafluorphosphoran, Bis(fluoralkyl)trifluorphosphoran oder Tris(fluoralkyl)difluorphosphoran mit Wasser nach einem oder mehreren der Ansprüche 1 bis 4 und anschließende Verwendung von Bis(fluoralkyl)phosphinsäure und/oder Fluoralkylphosphonsäure als Katalysator in der organischen Chemie.

## Claims

1. Process for the preparation of bis(fluoroalkyl)phosphinic acid and fluoroalkylphosphonic acid or of bis(fluoroalkyl)phosphinic acid or fluoroalkylphosphonic acid by reaction of monofluoroalkyltetrafluorophosphorane, bis(fluoroalkyl)trifluorophosphorane or tris(fluoroalkyl)difluorophosphorane with water.

2. Process according to Claim 1, **characterised in that** a bis(fluoroalkyl)-phosphinic acid and/or fluoroalkylphosphonic acid of the formula I
(CₓF_{2x+1-y}H_{y})ₙP(O)(OH)ₘ I
is prepared, where
x stands for 1, 2, 3, 4, 5, 6, 7, 8, 9, 10, 11 or 12,
y stands for 0, 1,2,3,4 or 5, but where y = 0, 1 or 2 for x = 1 or 2,
n stands for 1 or 2,
m stands for 1 or 2,
with the proviso that n+m is equal to 3.

3. Process according to Claim 1 or 2, **characterised in that** the phosphorane employed is a compound of the formula II
(CₓF_{2x+1-y}H_{y})ₖPFₚ II,
where
x stands for 1, 2, 3, 4, 5, 6, 7, 8, 9, 10, 11 or 12,
y stands for 0, 1, 2 or 3,
k stands for 1, 2 or 3,
p stands for 2, 3 or 4,
with the proviso that k+p is equal to 5.

4. Process according to one or more of Claims 1 to 3, **characterised in that** the reaction is carried out at temperatures of 100°C to 150°C.

5. Process for the preparation of bis(fluoroalkyl)phosphinic acid and fluoroalkylphosphonic acid or of bis(fluoroalkyl)phosphinic acid or fluoroalkylphosphonic acid by reaction of monofluoroalkyltetrafluorophosphorane, bis(fluoroalkyl)trifluorophosphorane or tris(fluoroalkyl)difluorophosphorane with water according to one or more of Claims 1 to 4 and subsequent use of bis(fluoroalkyl)phosphinic acid and/or fluoroalkylphosphonic acid as catalyst in organic chemistry.

## Revendications

1. Procédé de préparation d'acide bis(fluoroalkyl)phosphinique et d'acide fluoroalkylphosphonique ou d'acide bis(fluoroalkyl)phosphinique ou d'acide fluoroalkylphosphonique par la réaction de monofluoroalkyltétrafluorophosphorane, de bis(fluoroalkyl)trifluorophosphorane ou de tris(fluoroalkyl)difluorophosphorane avec de l'eau.

2. Procédé selon la revendication 1, **caractérisé en ce qu'**un acide bis-(fluoroalkyl)phosphinique et/ou un acide fluoroalkylphosphonique de formule I
(CₓF_{2x+1-y}H_{y})ₙP(O)(OH)ₘ I
est préparé, où
x représente 1, 2, 3, 4, 5, 6, 7, 8, 9, 10, 11 ou 12,
y représente 0, 1, 2, 3, 4 ou 5, mais où y = 0, 1 ou 2 pour x = 1 ou 2,
n représente 1 ou 2,
m représente 1 ou 2,
à condition que n+m soit égal à 3.

3. Procédé selon la revendication 1 ou 2, **caractérisé en ce que** le phosphorane employé est un composé de formule II
(CₓF_{2x+1-y}H_{y})ₖPFₚ II,
dans laquelle
x représente 1, 2, 3, 4, 5, 6, 7, 8, 9, 10, 11 ou 12,
y représente 0, 1, 2 ou 3,
k représente 1, 2 ou 3,
p représente 2, 3 ou 4,
à condition que k+p soit égal à 5.

4. Procédé selon l'une ou plusieurs parmi les revendications 1 à 3, **caractérisé en ce que** la réaction est effectuée à des températures allant de 100°C à 150°C.

5. Procédé de préparation d'acide bis(fluoroalkyl)phosphinique et d'acide fluoroalkylphosphonique ou d'acide bis(fluoroalkyl)phosphinique ou d'acide fluoroalkylphosphonique par la réaction de monofluoroalkyltétrafluorophosphorane, de bis(fluoroalkyl)trifluorophosphorane ou de tris(fluoroalkyl)difluorophosphorane avec de l'eau selon l'une ou plusieurs parmi les revendications 1 à 4 et l'utilisation ultérieure d'acide bis(fluoroalkyl)phosphinique et/ou d'acide fluoroalkylphosphonique comme catalyseur en chimie organique.
